# EUROPEAN PATENT SPECIFICATION

(11) **EP 4 563 748 B1**
(45) Date of publication and mention of the grant of the patent: **15.04.2026**
(21) Application number: 24214004.4
(22) Date of filing: 19.11.2024
(51) Int. Cl.: E01H 4/02

(54) **TILLER ASSEMBLY FOR TREATING THE SOIL SURFACE**
FRÄSANORDNUNG ZUR BEHANDLUNG DER BODENOBERFLÄCHE
ENSEMBLE FRAISE POUR LE TRAITEMENT DE SURFACE DU SOL

(30) Priority: 28.11.2023 IT 202300025296
(43) Date of publication of application: 04.06.2025
(60) Divisional application: 25194657.0
(73) Proprietor: Xelom S.r.l., 39100 Bolzano Italy (IT)
(72) Inventor: WALDNER, Thomas, 39100 Bolzano (IT); NEULICHEDL, Alex, 39100 Bolzano (IT)
(74) Representative: Anselmi, Davide

(56) References cited:
- EP-A1- 4 212 670
- EP-B1- 0 089 460
- IT-A1- PG 960 017
- JP-A- 2003 189 701

## Description

### TECHNICAL FIELD

The present invention relates to a tiller assembly for treating a surface of a soil, for example a snowy mountain soil as well as an agricultural ground. The tiller assembly according to the invention is part of the technical sector of the production and commercialisation of vehicles and more generally machines, apparatuses and equipment for treating the surface of a soil. More specifically, the tiller assembly according to the invention finds particular and advantageous technical application for treating, in particular processing a snow cover deposited on the surface of a snowy soil, for example for processing the snow cover present on a surface of a slope of a ski lift, in such a way as to make the snow cover itself smooth and in general in optimal conditions for performing skiing activities.

The tiller assembly according to the invention is in particular intended to be operatively and mechanically mounted on a grooming vehicle, for example a ski groomer.

### BACKGROUND OF THE INVENTION

It is known, in the technical field of reference, the use of tiller assemblies in particular mounted on vehicles or machines, for example wheeled and/or tracked, for treating a surface of a soil, for example a snowy soil like the one present in a ski facility.

Such vehicles are commonly referred to with the term "snow groomer" or "ski groomer" in the technical jargon of the sector, and are commonly used for maintenance operations, in particular for processing the surface of a snow cover in order to make the snow cover itself suitable for performing skiing activities.

A tiller assembly of the known type typically comprises a tiller rotatably mounted on a support frame of the vehicle, and configured to rotate about a longitudinal axis substantially parallel to the surface of a soil to be treated, and substantially orthogonal to a direction of movement of the snow groomer.

The tiller assemblies for treating a surface soil of the known type have proved to be not without drawbacks in practice.

The main drawback lies in the fact that the tiller assemblies of the known type are constructively complex and expensive. In fact, these tiller assemblies comprise a plurality of mechanical members that require corresponding interfacing elements/bodies for a correct connection thereof as well as specific lubrication means for a prolonged operation thereof over time. In addition, such mechanical members are, at least in part, specially designed and/or shaped for the specific application.

A further drawback lies in the fact that the tiller assemblies of the known type are difficult to assemble industrially, or they at least require long assembly times, and need frequent and expensive maintenance interventions by a specialized operator.

A further drawback lies in the fact that the tiller assemblies of the known type are structurally not very rigid and have a limit to the maximum power they are able to transmit. In fact, those concerning the treatment/processing of the surface of a soil require the transmission of a high power for a prolonged interval of time. Therefore, the known transmission systems (i.e. toothed belt transmission and universal joint transmissions) are not able to fulfil the purpose just described, or at least they are not able to satisfy this requirement of values of power transmitted over time satisfactorily.

A further drawback lies in the fact that the tiller assemblies of the known type are unreliable. In fact, these tiller assemblies are not properly shielded from the surface of the soil being treated/processed. Therefore, any external bodies, for example dirt, debris or the like, may come into contact with the toothed belt transmission, the universal joint and the mechanical members for their connection, quickly compromising the functionality of the tiller assembly as a whole.

A further drawback lies in the fact that the tiller assemblies of the known type are bulky and/or not very compact.

IT PG 960017 A1 discloses a tiller assembly according to the preamble of claim 1.

### OBJECTS OF THE INVENTION

The object of the present invention is to provide a tiller assembly for a snow groomer that makes it possible to overcome and remedy, at least in part, the drawbacks of the aforementioned prior art.

A further object of the present invention is to provide a tiller assembly that allows to develop a high tilling power with a compact and/or not bulky configuration, compared to the solutions of the prior art.

A further object of the present invention is to provide a tiller assembly that has minimal maintenance interventions, or at least simple and rapid maintenance interventions.

A further object of the present invention is to provide a tiller assembly that is structurally rigid and reliable over time.

A further object of the present invention is to provide a tiller assembly that is constructively simple and quick to assemble.

A further object of the present invention is to provide a tiller assembly that is compact and/or not bulky.

A further object of the present invention is to provide a tiller assembly having an alternative and/or improved configuration, both in construction terms and functional terms, with respect to the solutions of the traditional prior art.

### SUMMARY

In this context, the technical task underlying the present invention is to provide a tiller assembly for a snow groomer which obviates the drawbacks in the prior art as described above.

In particular, the aforementioned objects are achieved with a tiller assembly in accordance with the features set forth in claim 1.

The dependent claims outline particularly advantageous embodiments of the invention.

### BRIEF DESCRIPTION OF THE DRAWINGS

Further features and advantages of the present invention will become more apparent from the approximate and thus non-limiting description of a preferred, but non-exclusive, embodiment of a tiller assembly for a snow groomer, as illustrated in the accompanying drawings, in which:
- figure 1 shows, according to a perspective view, a tiller assembly according to an embodiment of the present invention;
- figure 2A shows, according to a perspective view, the tiller assembly illustrated in figure 1 with some parts removed to better highlight others;
- figure 2B shows, according to a perspective view in section, a detail of the tiller assembly illustrated in figure 2A;
- figure 3A shows, according to a further longitudinal sectional view, the tiller assembly illustrated in figure 1;
- figure 3B shows, according to an enlarged detail view, a detail of the tiller assembly illustrated in figure 3A;
- figure 4 shows, according to a cross-sectional view, the tiller assembly illustrated in figure 1.

With reference to the drawings, they serve solely to illustrate embodiments of the invention with the aim of better clarifying, in combination with the description, the inventive principles at the basis of the invention.

### DETAILED DESCRIPTION OF THE INVENTION

With reference to the appended figures, a tiller assembly for treating a surface soil has been indicated as a whole with number 10.

More specifically, the tiller assembly 10 according to the invention is advantageously employed for treating a snow cover deposited on a snowy soil, for example the surface of a soil of a slope of a ski facility.

In particular, the tiller assembly 10 according to the invention is intended to be operatively and mechanically mounted on a grooming vehicle.

The term "grooming vehicle", also commonly referred to as "snow groomer" or "ski groomer", shall mean for the purposes of this description any vehicle or machine designed to treat, in particular smooth, a snow cover lying on a surface of a soil, for example a slope of a ski facility or the like. However, the tiller assembly 10 according to the invention can advantageously be mounted on a different vehicle, machine or apparatus for treating a soil, for example of the agricultural type, without thereby departing from the scope of the present description.

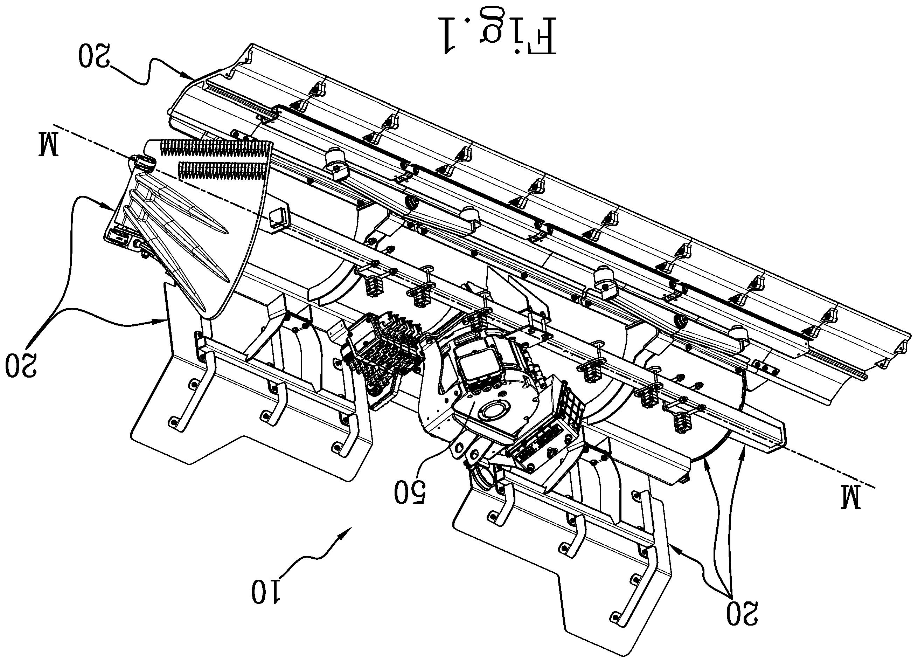

In accordance with the embodiment illustrated in the appended figures 1-4, the tiller assembly 10 for treating a surface of a soil, preferably a snowy soil, comprises a support structure 20.

The support structure is configured to accommodate a plurality of assembled functional groups and components, in particular introduced and described in more detail in the remainder of the description.

According to one aspect of the invention, the support structure 20 extends mainly along an axis M-M, preferably substantially transverse, in particular orthogonal, to the advancement direction of the tiller assembly 10 along a surface of a soil to be treated (see figure 1).

Preferably, the support structure 20 is made of a metallic material, in particular steel, for example starting from one or more carbon steel metal sheets for carpentry (e.g. S235JR or S355 JR, or the like) so as to give strength and rigidity during operation of the tiller assembly 10.

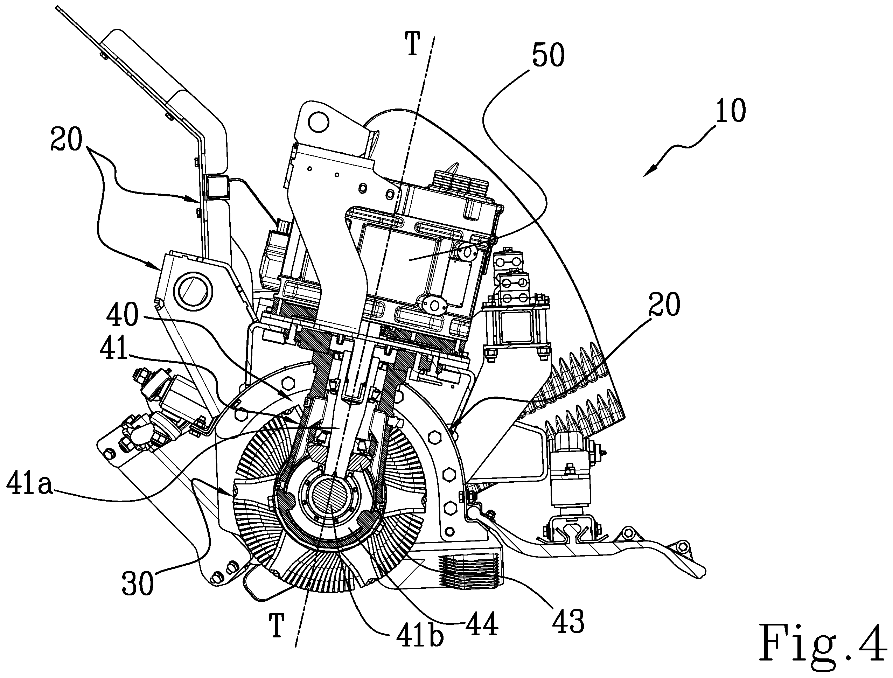

In particular, as illustrated in detail in figure 4, the aforementioned metal sheets are suitably shaped in such a way as to wrap a tiller, at least in part, and are mechanically connected to each other by connection means, for example of the threaded type (i.e. bolts) or of the riveted type or of the permanent type, i.e. welded.

According to one aspect of the invention, the tiller assembly 10 comprises a tiller 30, in particular illustrated in detail in the figure. More specifically, the tiller 30 is rotatably mounted on the support structure 20, extends along the tilling axis M-M, and is configured to rotate about the tilling axis M-M so as to treat the soil, in particular during an advancement thereof.

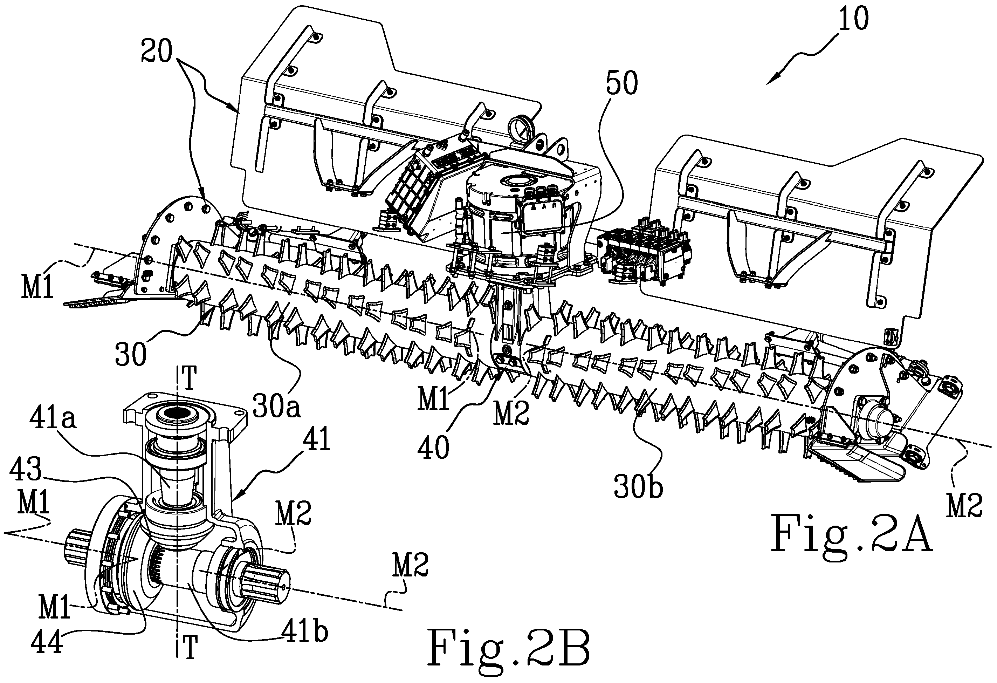

Preferably, the tiller 30 comprises a central body having a substantially cylindrical shape and a plurality of teeth suitably shaped to treat/process the surface of a soil, and mechanically connected to the central body itself (see figure 2A).

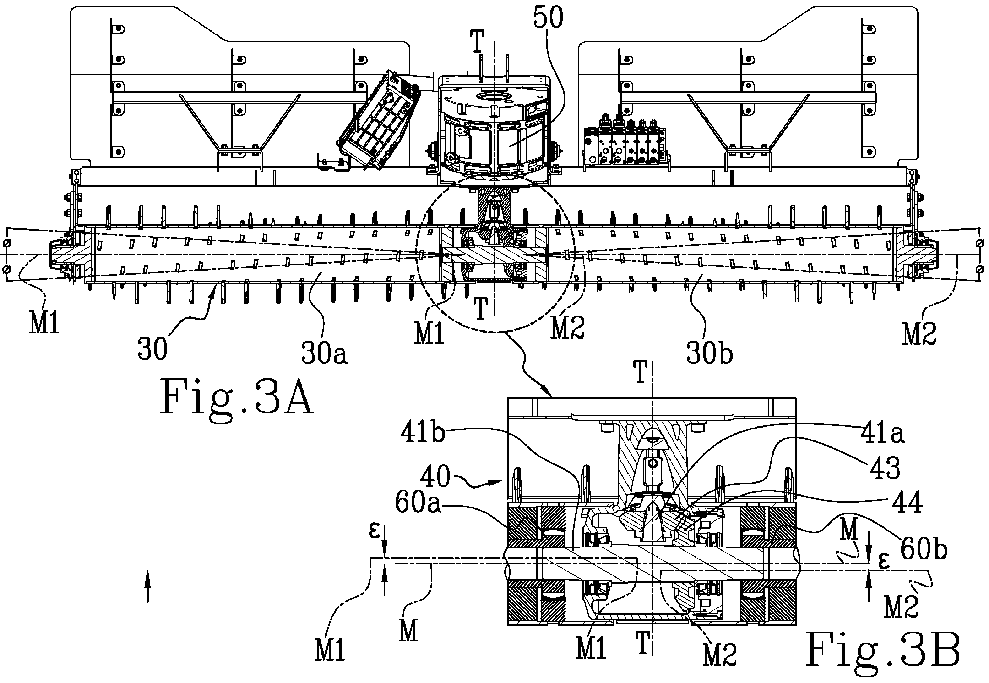

As illustrated in detail in figure 3A, the teeth extend substantially orthogonally to the cylindrical surface of the central body and are mechanically connected to the central body itself by preferably a welding process.

Therefore, the teeth and the central body of the tiller 30 are made of a metallic material, in particular of a wear-resistant steel.

According to one aspect of the invention, the tiller 30 comprises a first tilling portion 30a extending along a first tilling axis M1-M1, and a second tilling portion 30b extending along a second tilling axis M2-M2 (see figure 2A). Preferably, the first tilling portion 30a and the second tilling portion 30b are substantially equal to each other.

Preferably, the first tilling portion 30a and the second tilling portion 30b are spaced apart from each other.

In accordance with the embodiment illustrated in detail in figure 2A, the tiller assembly 10 comprises transmission means 40 interposed between the first and second tilling portion 30a, 30b, mechanically connected to the first and second tilling portion 30a, 30b, and configured to drive by rotation the first and second tilling portion 30a, 30b around the respective tilling axes M1-M1 and M2-M2.

More specifically, the transmission means 40 is interposed between the first and second tilling portion 30a, 30b and the motor 50 (see figures 2A and 3A). In other words, the transmission means 40 mechanically connects the motor 50 to the first and second tilling portion 30a, 30b, thus achieving an interfacing function between the motor 50 and the first and second tilling portion 30a, 30b.

According to one aspect of the invention, the transmission means 40 comprises a reducer, in particular a mechanical reducer. The reducer in particular does not comprise any belt transmission, for example a toothed or trapezoidal belt.

In fact, the transmission means 40 comprises a gear reducer 41 configured to receive a mechanical power from a motor 50 and to transmit it to the first and second tilling portion 30a, 30b.

Advantageously, by means of a gear reducer 41 it is possible to transmit a higher power compared to a different type of mechanical transmission, such as in particular a toothed belt or chain transmission.

In addition, the aforementioned gear reducer 41 is housed in a casing (i.e. a hollow body) made of a metallic material, in particular cast iron, for example by means of a casting process.

More specifically, the casing is substantially closed, in particular hermetically sealed against an external environment, and defines a shell within which the mechanical members of the gear reducer 41 (introduced and described in more detail below) are housed.

In other words, the gear reducer 41 is substantially shielded from an external environment. Advantageously, this prevents dirt and/or natural elements present on the surface of a soil being processed from coming into contact with the mechanical members of the gear reducer 41 and compromising the functionality of the gear reducer itself. In this way, the life of the gear reducer 41 and therefore of the transmission means 40 is prolonged over time and in addition the maintenance interventions by a specialized operator are reduced to a minimum.

According to one aspect of the invention, the gear reducer 41 comprises lubricating oil, in particular contained inside the casing in such a way as to lubricate the gear reducer 41 itself during its operation. In other words, the gear reducer 41 is oil bathed.

Advantageously, the useful life of the gear reducer 41 is prolonged over time and therefore consequently also the useful life of the tiller assembly 10.

In addition, the gear reducer 41 is a stand-alone component, that is, a single assembled unit, and is clearly visible in figure 2B. Advantageously, any maintenance operations are simple and quick, since an operator can easily disconnect the gear reducer 41 as a single unit (i.e. in a single block) and inspect and/or perform the required and specifically dedicated maintenance without having to disassemble further mechanical members of the tiller assembly 10.

Advantageously, the tiller assembly 10 according to the invention allows a simple and streamlined management of its functional groups and/or mechanical spare parts.

According to one aspect of the invention, the transmission means 40 further comprises first connection means 60a connected to the first portion 30a and second connection means 60b connected to the second portion 60b, spaced apart from and opposite to each other with respect to the gear reducer 41.

More specifically, the first and second connection means 60a, 60b are configured to mechanically connect respectively the first and second portion 30a, 30b to the gear reducer 41 in such a way as to achieve a joint rotation of the first and second tilling portion 30a, 30b around the respective first and second tilling axis M1-M1, M2-M2.

In other words, the first and second connection means 60a, 60b are configured to drag the first and second tilling portion 30a, 30b into rotation around the respective first and second tilling axis M1-M1, M2-M2. According to one aspect of the invention, the first and second connection means 60a, 60b are movable, between an aligned configuration in which the first and second tilling portion 30a, 30b are oriented substantially parallel to the tilling axis M-M and an inclined configuration in which the first and second tilling portion 30a, 30b are inclined according to an angle of inclination ϕ to allow the first and second tilling portion 30a, 30b to adapt to a conformation of the surface soil to be treated.

In other words, the connection means 60a, 60b in addition to allowing a transmission of a mechanical power, in particular a transmission of a torque, coming from the motor 50 (as anticipated above), allows a movement of the aforementioned first and second tilling portion 30a, 30b with the respective first and second tilling axis M1-M1, M2-M2 with respect to the tilling axis M-M.

In fact, in the aligned configuration the first and second tilling axis M1-M1, M2-M2 are substantially aligned with each other and substantially aligned with the axis M-M. While, in the inclined configuration the aforementioned axes M1-M1, M2-M2 have a respective angle of inclination ϕ with respect to the tilling axis M-M.

In accordance with the embodiment illustrated in detail in figures 2A - 4, the transmission means 40 is configured to transmit a power along a transmission axis T-T transverse to the tilling axis M-M.

According to one aspect of the invention, the gear reducer 41 comprises a driving shaft 41a arranged substantially parallel to the transmission axis T-T (preferably vertically), configured to rotate about the transmission axis T-T and comprising a drive sprocket 43.

The gear reducer 41 further comprises a driven shaft 41b arranged orthogonally with respect to the transmission axis T-T (preferably horizontally) and comprises a driven gear 44.

In particular, the drive sprocket 43 and the driven gear 44 are constrained to each other to define an angular coupling.

In other words, the gear reducer 41 is a gear reducer of the angular type, i.e. it achieves a deviation of the power coming from the motor 50 by an angle substantially equal to 90°. In addition, the gear reducer 41 achieves an amplification of the torque (expressed in Nm) transmitted by the motor 50 towards the first and second tilling portion 30a, 30b (consequently reducing the angular speed of rotation expressed in radians/second). Advantageously, with a single functional group, i.e. the gear reducer 41, the double function of deviating the motion by 90 degrees as well as amplification of the torque transmitted by the motor 50 towards the first and second tilling portion 30a, 30b is achieved.

According to a preferred but not exclusive aspect of the invention, the gear reducer 41 is of the single-stage type. In other words, as illustrated in figure 2B, the gear reducer 41 comprises a single stage of amplification of the torque coming from the motor 50, and a corresponding angular speed reduction of the first and second tilling portion 30a, 30b to which the gear reducer 41 is connected. In fact, this single reduction/amplification stage is represented by the aforementioned mechanical coupling between the motor sprocket 43 and the driven wheel 44 (see figure 2B).

According to one aspect of the invention, the gear reducer 41 comprises at least one bevel torque such as to deviate and amplify a power coming from the motor 50 towards the first and second tilling portion 30a, 30b as anticipated above.

In accordance with the embodiment illustrated in detail in figure 3A-3B, the connection means 60 comprises a first tooth coupling 60a interposed between the gear reducer 41 and the first tilling portion 30a, and a second tooth coupling 60b interposed between the gear reducer 41 and the second tilling portion 30b.

More specifically, the first and second tooth coupling 60a, 60b are configured to mechanically connect respectively the first and second tilling portion 30a, 30b with the gear reducer 41 in such a way as to drag them into rotation around the respective first and second tilling axis M1-M1, M2-M2, and to allow an inclination of the first and second tilling axis M1-M1, M2-M2, in such a way as to allow an adaptation and/or adjustment of the first and second tilling portion 30a, 30b with respect to the surface of the soil on which the tiller assembly is working.

Advantageously, the first and second tooth couplings 60a, 60b are a simple and economical solution. In fact, these tooth couplings 60a, 60b are mechanical members well established in the art, standardized, and easily available on the market, for example for a quick replacement thereof.

In addition, the tooth couplings 60a, 60b are advantageously simple to assemble, noiseless (in particular thanks to the internal toothed coupling) and require minimal lubrication and maintenance over time.

According to one aspect of the invention, the first and second tooth coupling 60a, 60b each comprise two mutually coupled parts:
a first part (of the sprocket type) having a toothing rounded outwards according to a direction radial to the axis M,
a second part (of the ring gear type) meshed with said first part and having internal teeth facing the axis M. Preferably, the teeth of said second part are linear (not rounded).

Preferably, the tooth couplings 60a, 60b do not have motion transmission balls or shafts.

Preferably, the first and second coupling are made of a phosphated steel or resin.

Advantageously, the configuration just described allows to guarantee a high resistance to corrosion and atmospheric agents, helping to prolong over time the useful operating life of the tiller assembly 10 as a whole. According to one aspect of the invention, the first tooth coupling 60a and the second tooth coupling 60b are further configured to allow an eccentricity value ε between the first tilling axis M1-M1 and the second tilling axis M2-M2 of the first and second tilling portion 30a, 30b, respectively.

In other words, the first and second tooth coupling 60a, 60b allow, in addition to the aforementioned inclined configuration respectively of the first and second tilling axis M1-M1, M2-M2 with respect to the tilling axis M-M, a further degree of freedom. This further degree of freedom corresponds to a reciprocal movement of the aforementioned first and second tilling axis M1-M1, M2-M2, in such a way as to achieve a misalignment between the aforementioned ones.

Preferably, the eccentricity value depends substantially on the constructive geometry of the first and second tooth coupling 60a, 60b, and even more in particular on the size of the tooth couplings themselves (i.e. on the dimensions and therefore on the transmitted power).

In accordance with the embodiment of the invention illustrated in particular in figure 4, the motor 50 is directly coupled to the gear reducer 41 without the interposition of any additional mechanical transmission.

In other words, the motor 50 is in direct coupling with the gear reducer 41. This mechanical coupling is also referred to with the term "direct control" in the technical jargon of the sector, and aimed at indicating a direct connection between motor 50 and gear reducer 41.

In accordance with the invention, the motor 50 comprises its own rotor directly mounted on the driving shaft 41a so that the transmission axis T-T is aligned with a rotation axis of said rotor.

In particular, the rotor of the motor 50 is keyed (one forms the continuation of the other) to the driving shaft 41a. In other words, the rotation axis of the rotor of the motor 50 is aligned (and parallel) to the transmission axis T-T. In other words, this configuration is, in jargon, defined as "motor 50 directly mounted on the transmission axis T-T" referred to the gear reducer 41.

In this way, the motor 50 is oriented (considering the rotation axis of its rotor as the axis of orientation of the motor 50) orthogonally to the tilling axis M-M (vertically) in order to optimize the overall dimensions.

Advantageously, the tiller assembly 10 according to the invention does not need additional transmissions, between the motor 50 and the tiller 30, and this makes it simple, compact and/or not bulky compared to the solutions of the prior art.

Advantageously, the tiller assembly 10 being free of mechanical transmissions between the motor 50 and the tiller 30, in particular mechanical transmissions of the flexible type such as for example a toothed belt or chain transmission, is mechanically rigid.

According to one aspect of the invention, the motor 50 is of the type selectable between an electric motor, and a hydraulic motor.

According to one aspect of the invention, the first and second tooth coupling 60a, 60b are not a universal joint or homokinetic joint.

As anticipated in the prior art, the universal joint has multiple drawbacks. In fact, this joint is subject to rapid deterioration and wear when used in applications where high and prolonged torques over time are transmitted.

Therefore, this universal joint is not very suitable for severe and/or heavy technical applications such as those reported in the technical field in which the present invention fits.

It is also an object of the present invention a snow groomer for treating a snowy surface, extending along an advancement direction, between a front end and a rear end opposite said front end, of which the same numbering will be maintained for simplicity of exposure.

Preferably, the advancement direction of the snow groomer is substantially orthogonal to the tilling axis M-M along which the tiller assembly 10 extends. According to one aspect of the invention, the snow groomer comprises a frame on which there are mounted advancement means, for example wheels and/or tracks, and at least one tiller assembly 10 connected to the frame at the snowy surface and having the characteristics described above. According to one aspect of the invention, the tiller assembly 10 is preferably mounted at the rear end.

## Claims

1. A tiller assembly (10) for treating a surface of a soil, preferably a snowy soil, comprising:
- a support structure (20);
- a tiller (30) rotatably mounted on said support structure (20), extending along a tilling axis (M-M), and configured to rotate about said tilling axis (M-M) so as to treat said soil;
said tiller (30) comprising a first tilling portion (30a) extending along a first tilling axis (M1-M1), and a second tilling portion (30b) extending along a second tilling axis (M2-M2);
- transmission means (40) at least partly interposed between said first and second tilling portion (30a, 30b), mechanically connected to said first and second tilling portion (30a, 30b), and configured to drive by rotation said first and second tilling portion (30a, 30b) around respective tilling axis (M1-M1, M2-M2);
wherein said tiller assembly comprises a motor (50), wherein said transmission means (40) comprises:
- a gear reducer (41) configured to receive a mechanical power from the motor (50) and to transmit it to said first and second tilling portion (30a, 30b); and
- first connection means (60a) connected to said first portion (30a) and second connection means (60b) connected to said second portion (30b), spaced apart from and opposite each other with respect to said gear reducer (41),
said first and second connection means (60a, 60b) being configured to mechanically connect respectively said first and second portion (30a, 30b) to said gear reducer (41) in such a way as to achieve a transmission of the rotation from said gear reducer (41) to said first and second tilling portion (30a, 30b) that rotate around the respective first and second tilling axis (M1-M1, M2-M2);
said first and second connection means (60a, 60b) being movable, between an aligned configuration in which said first and second tilling portion (30a, 30b) are oriented substantially parallel to said tilling axis (M-M) and an inclined configuration in which said first and second tilling portion (30a, 30b) are inclined according to an angle of inclination (ϕ) to allow said first and second tilling portion (30a, 30b) to adapt to a conformation of the surface soil to be treated;
**characterised in that**
said gear reducer (41) is configured to transmit a mechanical power along a transmission axis (T-T) transverse to said tilling axis (M-M), and comprises:
- a driving shaft (41a) arranged along said transmission shaft (T-T) and configured to rotate about said transmission axis (T-T) and comprising a drive sprocket (43);
- a driven shaft (41b) arranged orthogonally with respect to said transmission axis (T-T) and comprising a driven gear (44);
said drive sprocket (43) and said driven gear (44) defining an angular coupling between them;
wherein said motor (50) comprises its own rotor directly mounted on the driving shaft (41a) so that the transmission axis (T-T) is aligned with a rotation axis of said rotor.

2. The tiller assembly (10) according to claim 1, wherein said gear reducer (41) is of the single-stage type.

3. The tiller assembly (10) according to any one of the preceding claims, wherein said gear reducer (41) comprises at least one bevel gear so as to deviate and amplify a mechanical power coming from said motor (50) towards said first and second tilling portion (30a, 30b).

4. The tiller assembly (10) according to any one of the preceding claims, wherein said first and second connection means (60a, 60b) comprises:
- a first tooth coupling (60a) interposed between said gear reducer (40) and said first tilling portion (30a), and
- a second tooth coupling (60b) interposed between said gear reducer (41) and said second tilling portion (30b);
said first and second tooth coupling (60a, 60b) being configured to mechanically connect respectively said first and second tilling portion (30a, 30b) with said gear reducer (41) in such a way as to drag them into rotation around the respective first and second tilling axis (M1-M1, M2-M2), and to allow a simultaneous inclination of said first and second tilling axis (M1-M1, M2-M2).

5. The tiller assembly (10) according to claim 4, wherein said first tooth coupling (60a) and said second tooth coupling (60b) are configured to allow a predefined eccentricity value (ε) between said first tilling axis (M1-M1) and said second tilling axis (M2-M2).

6. The tiller assembly (10) according to any one of the preceding claims, wherein said motor (50) is directly coupled to said gear reducer (41) without interposition of any additional mechanical transmission.

7. The tiller assembly (10) according to any one of the preceding claims, wherein said motor (50) is of the type selectable between: an electric motor or a hydraulic motor.

8. The tiller assembly (10) according to any one of the preceding claims, wherein said first and second tooth coupling (60a, 60b) are not a universal or homokinetic joint.

9. The tiller assembly (10) according to any one of the preceding claims, wherein said first and second tooth coupling (60a, 60b) each comprise two mutually coupled parts:
a first part, preferably of the sprocket type, having a toothing rounded outwards according to a direction radial to the tilling axis (M-M),
a second part, preferably of the ring gear type, meshed with said first part and having internal teeth facing the tilling axis (M-M).

10. A snow groomer for treating a snowy surface, extending along a feed direction between a front end and a rear end opposed said front end,
said snow groomer comprising:
- a frame on which an advancement means is mounted;
- at least one tiller assembly (10) connected to said frame at the snowy surface and made in accordance with the features set out in claims 1 to 10.

11. The snow groomer according to claim 10, wherein said tiller assembly (10) is mounted at said rear end.

## Patentansprüche

1. Fräsanordnung (10) zur Bearbeitung einer Oberfläche eines Bodens, vorzugsweise eines schneebedeckten Bodens, umfassend:
- eine Stützstruktur (20);
- ein Fräser (30), der drehbar auf der Stützstruktur (20) montiert ist, sich entlang einer Fräsachse (M-M) erstreckt und ausgelegt ist, um sich um die Fräsachse (M-M) zu drehen, sodass der Boden bearbeitet wird, wobei der Fräser (30) einen ersten Fräsabschnitt (30a), der sich entlang einer ersten Fräsachse (M1-M1) erstreckt, und einen zweiten Fräsabschnitt (30b) umfasst, der sich entlang einer zweiten Fräsachse (M2-M2) erstreckt;
- Übertragungsmittel (40), die zumindest teilweise zwischen dem ersten und dem zweiten Fräsabschnitt (30a, 30b) eingesetzt sind, mechanisch mit dem ersten und zweiten Fräsabschnitt (30a, 30b) verbunden und ausgelegt sind, um den ersten und zweiten Fräsabschnitt (30a, 30b) rotatorisch um jeweilige Fräsachsen (M1-M1, M2-M2) anzutreiben,
wobei die Fräsanordnung einen Motor (50) umfasst, wobei die Übertragungsmittel (40) Folgendes umfassen:
- ein Untersetzungsgetriebe (41), das ausgelegt ist, um eine mechanische Leistung von dem Motor (50) aufzunehmen und diese auf den ersten und zweiten Fräsabschnitt (30a, 30b) zu übertragen; und
- erste Verbindungsmittel (60a), die mit dem ersten Abschnitt (30a) verbunden sind, und zweite Verbindungsmittel (60b), die mit dem zweiten Abschnitt (30b) verbunden sind, die in Bezug auf das Untersetzungsgetriebe (41) voneinander beabstandet und gegenständig zueinander angeordnet sind,
wobei die ersten und zweiten Verbindungsmittel (60a, 60b) ausgelegt sind, um den ersten und zweiten Abschnitt (30a, 30b) jeweils mechanisch mit dem Untersetzungsgetriebe (41) derart zu verbinden, dass eine Übertragung der Drehung von dem Untersetzungsgetriebe (41) auf den ersten und zweiten Fräsabschnitt (30a, 30b), die sich um die jeweilige erste und zweite Fräsachse (M1-M1, M2-M2) drehen, erzielt wird,
wobei die ersten und zweiten Verbindungsmittel (60a, 60b) zwischen einer fluchtenden Auslegung, in der der erste und der zweite Fräsabschnitt (30a, 30b) im Wesentlichen parallel zu der Fräsachse (M-M) ausgerichtet sind, und einer geneigten Auslegung, in der der erste und der zweite Fräsabschnitt (30a, 30b) in einem Neigungswinkel (ϕ) geneigt sind, um dem ersten und zweiten Fräsabschnitt (30a, 30b) zu ermöglichen, sich an eine Beschaffenheit der zu bearbeitenden Bodenoberfläche anzupassen, bewegbar sind,
**dadurch gekennzeichnet, dass** das Untersetzungsgetriebe (41) ausgelegt ist, um eine mechanische Leistung entlang einer Übertragungsachse (T-T) quer zu der Fräsachse (MM) zu übertragen, und Folgendes umfasst:
- eine Antriebswelle (41a), die entlang der Übertragungswelle (T-T) angeordnet und ausgelegt ist, um sich um die Übertragungsachse (T-T) zu drehen, und die ein Antriebskettenrad (43) umfasst;
- eine Abtriebswelle (41b), die in Bezug auf die Übertragungsachse (T-T) orthogonal angeordnet ist und ein angetriebenes Zahnrad (44) umfasst,
wobei das Antriebskettenrad (43) und das angetriebene Zahnrad (44) eine winkelige Kupplung zwischen ihnen definieren,
wobei der Motor (50) seinen eigenen Rotor umfasst, der direkt auf der Antriebswelle (41a) montiert ist, sodass die Übertragungsachse (T-T) fluchtend zu einer Rotationsachse des Rotors angeordnet ist.

2. Fräsanordnung (10) nach Anspruch 1, wobei das Untersetzungsgetriebe (41) vom einstufigen Typ ist.

3. Fräsanordnung (10) nach einem der vorhergehenden Ansprüche, wobei das Untersetzungsgetriebe (41) mindestens ein Kegelrad umfasst, sodass eine von dem Motor (50) kommende Leistung in Richtung des ersten und zweiten Fräsabschnitts (30a, 30b) abgeleitet und verstärkt übertragen wird.

4. Fräsanordnung (10) nach einem der vorhergehenden Ansprüche, wobei die ersten und zweiten Verbindungsmittel (60a, 60b) Folgendes umfassen:
- eine erste Zahnkupplung (60a), die zwischen dem Untersetzungsgetriebe (40) und dem ersten Fräsabschnitt (30a) eingesetzt ist, und
- eine zweite Zahnkupplung (60b), die zwischen dem Untersetzungsgetriebe (41) und dem zweiten Fräsabschnitt (30b) eingesetzt ist,
wobei die erste und die zweite Zahnkupplung (60a, 60b) ausgelegt sind, um jeweils den ersten und den zweiten Fräsabschnitt (30a, 30b) mit dem Untersetzungsgetriebe (41) derart zu verbinden, dass sie um die jeweilige erste und zweite Fräsachse (M1-M1, M2-M2) in Drehung versetzt werden, und um eine gleichzeitige Neigung der ersten und zweiten Fräsachse (M1-M1, M2-M2) zu ermöglichen.

5. Fräsanordnung (10) nach Anspruch 4, wobei die erste Zahnkupplung (60a) und die zweite Zahnkupplung (60b) ausgelegt sind, um einen vordefinierten Exzentrizitätswert (E) zwischen der ersten Fräsachse (M1-M1) und der zweiten Fräsachse (M2-M2) zu ermöglichen.

6. Fräsanordnung (10) nach einem der vorhergehenden Ansprüche, wobei der Motor (50) direkt mit dem Untersetzungsgetriebe (41) ohne Einsetzen einer zusätzlichen mechanischen Übertragung gekuppelt ist.

7. Fräsanordnung (10) nach einem der vorhergehenden Ansprüche, wobei der Motor (50) vom Typ ist, der auswählbar ist zwischen: einem elektrischen Motor oder einem hydraulischen Motor.

8. Fräsanordnung (10) nach einem der vorhergehenden Ansprüche, wobei die erste und die zweite Zahnkupplung (60a, 60b) weder ein Universal- noch ein Gleichlaufgelenk sind.

9. Fräsanordnung (10) nach einem der vorhergehenden Ansprüche, wobei die erste und die zweite Zahnkupplung (60a, 60b) jeweils zwei gegenseitig gekuppelte Teile umfassen:
einen ersten Teil, der vorzugsweise vom Kettenradtyp ist, aufweisend eine Verzahnung, die gemäß einer zu der Fräsachse (M-M) radial verlaufenden Richtung nach außen abgerundet ist;
einen zweiten Teil, der vorzugsweise vom Zahnkranztyp ist, mit dem ersten Teil im Eingriff steht und Innenzähne aufweist, die der Fräsachse (M-M) zugewandt sind.

10. Pistenfahrzeug zur Bearbeitung einer schneebedeckten Oberfläche, das sich entlang einer Zuführungsrichtung zwischen einem vorderen Ende und einem hinteren Ende, das dem vorderen Ende entgegengesetzt ist, erstreckt, wobei das Pistenfahrzeug Folgendes umfasst:
- einen Rahmen, auf dem Vorschubmittel montiert sind;
- mindestens eine Fräsanordnung (10), die mit dem Rahmen an der schneebedeckten Oberfläche verbunden und mit den Merkmalen nach den Ansprüchen 1 bis 10 ausgeführt ist.

11. Pistenfahrzeug nach Anspruch 10, wobei die Fräsanordnung (10) an dem hinteren Ende montiert ist.

## Revendications

1. Ensemble fraise (10) pour le traitement de surface du sol, de préférence un sol enneigé, comprenant :
- une structure de support (20) ;
- une fraise (30) montée de manière rotative sur ladite structure de support (20), s'étendant le long d'un axe de fraisage (M-M), et configurée pour tourner autour dudit axe de fraisage (M-M) de manière à traiter ledit sol ;
ladite fraise (30) comprenant une première portion de fraisage (30a) s'étendant le long d'un premier axe de fraisage (M1-M1), et une seconde portion de fraisage (30b) s'étendant le long d'un second axe de fraisage (M2-M2) ;
- des moyens de transmission (40) au moins partiellement interposés entre lesdites première et seconde portions de fraisage (30a, 30b), reliés mécaniquement auxdites première et seconde portions de fraisage (30a, 30b), et configurés pour entraîner par rotation lesdites première et seconde portions de fraisage (30a, 30b) autour d'un axe de fraisage (M1-M1, M2-M2) respectif ;
dans lequel ledit ensemble fraise comprend un moteur (50), dans lequel lesdits moyens de transmission (40) comprennent :
- un réducteur à engrenages (41) configuré pour recevoir une puissance mécanique du moteur (50) et pour la transmettre auxdites première et seconde portions de fraisage (30a, 30b) ; et
- des premiers moyens de liaison (60a) reliés à ladite première portion (30a) et des seconds moyens de liaison (60b) reliés à ladite seconde portion (30b), espacés et opposés l'un à l'autre par rapport audit réducteur à engrenages (41),
lesdits premier et second moyens de liaison (60a, 60b) étant configurés pour relier de manière mécanique respectivement lesdites première et seconde portions (30a, 30b) audit réducteur à engrenages (41) de manière à réaliser une transmission de la rotation dudit réducteur à engrenages (41) auxdites première et seconde portions de fraisage (30a, 30b) qui tournent autour des premier et second axes de fraisage (M1-M1, M2-M2) respectifs ;
lesdits premier et second moyens de liaison (60a, 60b) étant mobiles, entre une configuration alignée dans laquelle lesdites première et seconde portions de fraisage (30a, 30b) sont orientées substantiellement parallèlement audit axe de fraisage (M-M) et une configuration inclinée dans laquelle lesdites première et seconde portions de fraisage (30a, 30b) sont inclinées selon un angle d'inclinaison (ϕ) pour permettre auxdites première et seconde portions de fraisage (30a, 30b) de s'adapter à une conformation du sol de surface à traiter ;
**caractérisé en ce que** ledit réducteur à engrenages (41) est configuré pour transmettre une puissance mécanique le long d'un axe de transmission (T-T) transversal audit axe de fraisage (M-M), et comprend :
- un arbre d'entraînement (41a) agencé le long dudit arbre de transmission (T-T) et configuré pour tourner autour dudit axe de transmission (T-T) et comprenant un pignon d'entraînement (43) ;
- un arbre entraîné (41b) agencé orthogonalement par rapport audit axe de transmission (T-T) et comprenant un engrenage entraîné (44) ;
ledit pignon d'entraînement (43) et ledit engrenage entraîné (44) définissant un accouplement angulaire entre eux ;
dans lequel ledit moteur (50) comprend son propre rotor directement monté sur l'arbre d'entraînement (41a) de sorte que l'axe de transmission (T-T) est aligné sur un axe de rotation dudit rotor.

2. Ensemble fraise (10) selon la revendication 1, dans lequel ledit réducteur à engrenages (41) est du type à un seul étage.

3. Ensemble fraise (10) selon l'une quelconque des revendications précédentes, dans lequel ledit réducteur à engrenages (41) comprend au moins un engrenage conique de manière à dévier et à amplifier une puissance mécanique provenant dudit moteur (50) vers lesdites première et seconde portions de fraisage (30a, 30b).

4. Ensemble fraise (10) selon l'une quelconque des revendications précédentes, dans lequel lesdits premier et second moyens de liaison (60a, 60b) comprennent :
- un premier accouplement à dent (60a) interposé entre ledit réducteur à engrenages (40) et ladite première portion de fraisage (30a), et
- un second accouplement à dent (60b) interposé entre ledit réducteur à engrenages (41) et ladite seconde portion de fraisage (30b) ;
lesdits premier et second accouplements à dent (60a, 60b) étant configurés pour relier de manière mécanique respectivement lesdites première et seconde portions de fraisage (30a, 30b) audit réducteur à engrenages (41) de manière à les entraîner en rotation autour des premier et second axes de fraisage (M1-M1, M2-M2) respectifs, et pour permettre une inclinaison simultanée desdits premier et second axes de fraisage (M1-M1, M2-M2).

5. Ensemble fraise (10) selon la revendication 4, dans lequel ledit premier accouplement à dent (60a) et ledit second accouplement à dent (60b) sont configurés pour permettre une valeur d'excentricité (E) prédéfinie entre ledit premier axe de fraisage (M1-M1) et ledit second axe de fraisage (M2-M2).

6. Ensemble fraise (10) selon l'une quelconque des revendications précédentes, dans lequel ledit moteur (50) est directement accouplé audit réducteur à engrenages (41) sans interposition d'aucune transmission mécanique supplémentaire.

7. Ensemble fraise (10) selon l'une quelconque des revendications précédentes, dans lequel ledit moteur (50) est du type sélectionnable entre : un moteur électrique ou un moteur hydraulique.

8. Ensemble fraise (10) selon l'une quelconque des revendications précédentes, dans lequel lesdits premier et second accouplements à dent (60a, 60b) ne sont pas un joint universel ou homocinétique.

9. Ensemble fraise (10) selon l'une quelconque des revendications précédentes, dans lequel lesdits premier et second accouplements à dent (60a, 60b) comprennent chacun deux parties mutuellement accouplées :
une première partie, de préférence du type pignon, présentant une denture arrondie vers l'extérieur selon une direction radiale à l'axe de fraisage (M-M),
une seconde partie, de préférence du type couronne dentée, engrenée avec ladite première partie et ayant des dents internes faisant face à l'axe de fraisage (M-M).

10. Dameuse pour le traitement d'une surface enneigée, s'étendant le long d'une direction d'alimentation entre une extrémité avant et une extrémité arrière opposée à ladite extrémité avant, ladite dameuse comprenant :
- un châssis sur lequel sont montés des moyens d'avancement ;
- au moins un ensemble fraise (10) relié audit châssis au niveau de la surface enneigée et réalisé conformément aux caractéristiques énoncées dans les revendications 1 à 10.

11. Dameuse selon la revendication 10, dans lequel ledit ensemble fraise (10) est monté à ladite extrémité arrière.
